# EUROPEAN PATENT SPECIFICATION

(11) **EP 4 623 211 B1**
(45) Date of publication and mention of the grant of the patent: **23.09.2026**
(21) Application number: 23818196.0
(22) Date of filing: 03.11.2023
(51) Int. Cl.: F16B 35/04, F16B 35/02, F16B 13/08, F16B 19/10

(54) **FASTENER FOR ENGAGING THREADED OPENINGS**
BEFESTIGUNGSELEMENT ZUM EINRASTEN VON GEWINDEÖFFNUNGEN
ÉLÉMENT DE FIXATION DESTINÉ À VENIR EN PRISE AVEC DES OUVERTURES FILETÉES

(30) Priority: 22.11.2022 US 202263427328 P; 30.05.2023 US 202318203362
(43) Date of publication of application: 01.10.2025
(73) Proprietor: Raytheon Company, Arlington, VA 22209 (US)
(72) Inventor: CARPER, Brent, Tucson, Arizona 85715 (US); HUELSMANN, Eric, P., Tucson, Arizona 85743-9699 (US)
(74) Representative: Crowell & Moring U.K. LLP
(86) International application number: PCT/US2023/078638
(87) International publication number: WO 2024/112498

(56) References cited:
- US-A- 3 158 059
- US-A- 3 266 364

## Description

### CROSS-REFERENCE TO RELATED APPLICATION(S)

This application claims the benefit of U.S. Application No. 18/203,362 filed May 30, 2023 for "FASTENER FOR ENGAGING THREADED OPENINGS" by B. Carper and E.P. Huelsmann, which claims the benefit of Provisional Application No. 63/427,328 filed November 22, 2022 for "FASTENER FOR ENGAGING THREADED OPENINGS" by B. Carper and E.P. Huelsmann.

### BACKGROUND

The present disclosure relates generally to fasteners and specifically to a fastener which can engage threaded openings.

Fasteners, such as screws or temporary rivets, are frequently used in manufacturing to align and hold workpieces, such as metal panels, together. However, repeatedly inserting and removing threaded fasteners by rotating them within threaded openings can degrade the threads both on the fastener and within the opening. Conventional non-rotational fasteners often require openings to be sized to the fastener and may not be compatible with all types of openings. Repeated rotation of the fasteners can fatigue the material of the workpieces and, in more extreme examples, can cause ergonomic injuries due to repetitive motions.

US 3 158 059 A relates to releasable threaded fasteners.

US 3 266 364 A relates to releasable fasteners.

### SUMMARY

A fastener for engaging a threaded opening includes first and second shaft elements, an internal alignment shaft, a releasable constriction mechanism, a releasable expansion mechanism, and a cap. The first shaft element extends along a shaft axis from a first cap end to a first shaft end and has a partially cylindrical shape. The second shaft element extends along the shaft axis from a second cap end to a second shaft end and has a partially cylindrical shape. The second shaft element is disposed alongside and parallel the first shaft element. The internal alignment shaft extends along the shaft axis and is surrounded by a central cavity. The first shaft element and the second shaft element are oriented about the central cavity and the central cavity is defined by a first internal surface of the first shaft element and a second internal surface of the second shaft element. The releasable constriction mechanism is configured to constrict about the first shaft element and the second shaft element such that the first shaft element and the second shaft element move laterally inward toward the internal alignment shaft. The releasable expansion mechanism is configured to allow the first shaft element and the second shaft element to move laterally outward away from the internal alignment shaft. The cap is configured to move axially along the shaft axis, and is configured to engage the first cap end of the first shaft element and the second cap end of the second shaft element such that the first shaft element and the second shaft element move axially relative to the internal alignment shaft. At least a portion of at least one of the first shaft end and the second shaft end comprises external threads.

As further discussed herein, a fastener for engaging a threaded opening includes first and second shaft elements, an internal alignment shaft, at least one radial spring, at least one compression spring, a cap, and a housing. The first shaft element extends along a shaft axis from a first cap end to a first threaded end and has a partially cylindrical shape. At least a portion of the first threaded end comprises external threads. The second shaft element extends along the shaft axis from a second cap end to a second threaded end and has a partially cylindrical shape. At least a portion of the second threaded end comprises external threads. The second shaft element is disposed alongside and parallel the first shaft element. The internal alignment shaft extends along the shaft axis and is surrounded by a central cavity. The first shaft element and the second shaft element are oriented about the central cavity and the central cavity is defined by a first internal surface of the first shaft element and a second internal surface of the second shaft element. The at least one radial spring is configured to constrict about the first shaft element and the second shaft element such that the first shaft element and the second shaft element move laterally inward toward the internal alignment shaft. The at least one compression spring is configured to allow the first shaft element and the second shaft element to move laterally outward away from the internal alignment shaft. The cap is configured to move axially along the shaft axis, and is configured to engage the first cap end of the first shaft element and the second cap end of the second shaft element such that the first shaft element and the second shaft element move axially relative to the internal alignment shaft. The housing surrounds the first cap end and the second cap end, extends along the shaft axis to the first threaded end and the second threaded end, and is configured to receive the cap.

As also discussed herein, a method of fastening a first workpiece to a second workpiece includes depressing a cap of a fastener, thereby engaging a first cap end of a first shaft element of the fastener and a second cap end of a second shaft element of the fastener. The first shaft element extends from the first cap end to a first shaft end and has a partially cylindrical shape. The second shaft element extends from the second cap end to a second shaft end and has a partially cylindrical shape, and is disposed alongside and parallel the first shaft element. At least a portion of at least one of the first shaft end and the second shaft end comprise external threads. The first shaft element and the second shaft element move along tapered sections of an internal alignment shaft of the fastener. The tapered sections guide the movement of the first shaft element and the second shaft element both laterally and axially relative to the internal alignment shaft with respect to a shaft axis along which the first shaft element, the second shaft element, and the internal alignment shaft extend. A releasable constriction mechanism constricts the first shaft element and the second shaft element such that the first shaft element and the second shaft element move laterally inward toward the internal alignment shaft, guided by the tapered sections of the internal alignment shaft. The first shaft end and the second shaft end are inserted through a first opening of the first workpiece and into a second opening of the second workpiece which is situated adjacent to the first opening. The cap is released, thereby disengaging the first cap end and the second cap end. A releasable expansion mechanism allows the first shaft element to move laterally apart from the second shaft element guided by the tapered sections of the internal alignment shaft. The at least a portion of at least one of the first shaft end and the second shaft end comprising external threads engages threads within the second opening.

The present summary is provided only by way of example, and not limitation. Other aspects of the present disclosure will be appreciated in view of the entirety of the present disclosure, including the entire text, claims, and accompanying figures.

### BRIEF DESCRIPTION OF THE DRAWINGS

FIG. 1A is an exploded view of a fastener.
FIG. 1B is a perspective view of the fastener of FIG. 1A.
FIG. 1C is a top plan view of the fastener of FIG. 1A.
FIG. 1D is a side view of the fastener of FIG. 1A.
FIG. 1E is a cross-sectional view of the fastener of FIG. 1A along line A-A shown in FIG. 1C.
FIG. 2A is a cross-sectional view of a fastener adjacent to a threaded opening.
FIG. 2B is a cross-sectional view of the fastener of FIG. 2A with the cap depressed.
FIG. 2C is a cross-sectional view of the fastener of FIG. 2B inserted into the threaded opening.
FIG. 2D is a cross-sectional view of the fastener of FIG. 2C with the cap released.
FIG. 3 depicts a method of fastening two workpieces with a fastener.
FIG. 4 is a perspective view of a fastener with threaded and unthreaded shaft elements.
FIG. 5A is a cross-sectional view of a fastener with an open locking mechanism.
FIG. 5B is a cross-sectional view of the fastener of FIG. 5A with the locking mechanism locked.
FIG. 5C is a top plan view of the fastener of FIG. 5A.
FIGS. 6A-6B are perspective views of components of a fastener with a locking mechanism and a grip housing.
FIG. 6C is a top plan view of the components of FIGS. 6A-6B.
FIGS. 6D-6E are side views of the assembled components of FIGS. 6A-6B.

While the above-identified figures set forth one or more embodiments of the present disclosure, other embodiments are also contemplated, as noted in the discussion. In all cases, this disclosure presents the invention by way of representation and not limitation. It should be understood that numerous other modifications and embodiments can be devised by those skilled in the art, which fall within the scope of the invention as defined in the appended claims. The figures may not be drawn to scale, and applications and embodiments of the present invention may include features and components not specifically shown in the drawings.

### DETAILED DESCRIPTION

A fastener is presented herein that can engage female threads without requiring rotation to be inserted into a threaded opening, preventing wear on the threads. The fastener includes two or more threaded shaft elements which can be compressed for insertion into the opening, and then allowed to expand to fit the opening and engage the threads. The fastener also includes an internal alignment shaft with tapered sections which guide the movement of the threaded shaft elements relative to the internal alignment shaft.

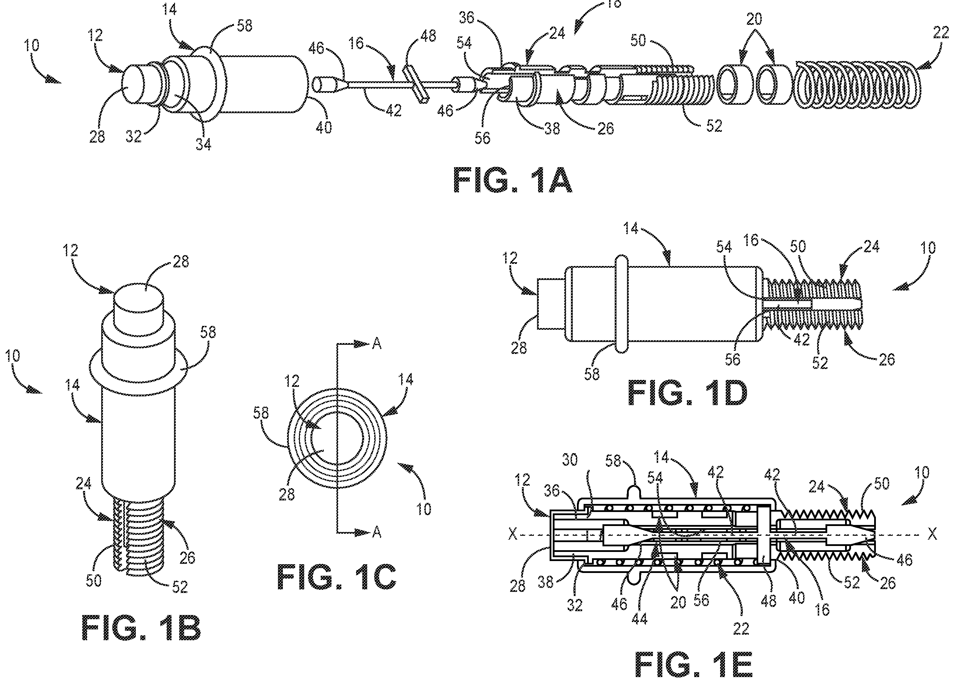

FIG. 1A is an exploded view of fastener 10. Fastener 10 includes cap 12, housing 14, internal alignment shaft 16, threaded shaft section 18, radial springs 20, and compression spring 22. Threaded shaft section 18 includes first shaft element 24 and second shaft element 26. FIG. 1B is a perspective view of fastener 10. FIG. 1C is a top plan view of fastener 10. FIG. 1D is a side view of fastener 10. FIG. 1E is a cross-sectional view of fastener 10 along line A-A shown in FIG. 1C. FIGS. 1A-1E will be discussed concurrently.

Cap 12 can have an approximate cylindrical shape and can be substantially hollow. In the example shown in FIGS. 1A-1E, cap 12 extends from closed end 28 to open end 30 and includes cap lip 32 at or adjacent open end 30, such that open end 30 (shown in FIG. 1E) has a diameter which is larger than the cap opening 34 formed in housing 14 through which closed end 28 extends. Housing 14 can surround first cap end 36 of first shaft element 24 and second cap end 38 of second shaft element 26, and can be approximately cylindrical in shape and substantially hollow. Housing 14 can extend along shaft axis X-X (shown in FIG. 1E) from cap 12 to threaded shaft section 18, and can define cap opening 34 and shaft opening 40. Central body 42 of internal alignment shaft 16 extends along shaft axis X-X and is surrounded by central cavity 44 (shown in FIG. 1E). Central cavity 44 separates first shaft element 24 and second shaft element 26 from central body 42. In the example shown in FIGS. 1A-1E, internal alignment shaft 16 includes tapered sections 46 oriented along central body 42. Tapered sections 46 can be approximately conical in shape. Internal alignment shaft 16 can additionally include cross bar 48, which can be oriented perpendicular to central body 42. Threaded shaft section 18 includes first shaft element 24, which extends along shaft axis X-X from first cap end 36 to first shaft end 50, and second shaft element 26, which extends along shaft axis X-X from second cap end 38 to second shaft end 52. Both first shaft element 24 and second shaft element 26 have an approximately partially cylindrical shape. At least a portion of at least one of first shaft end 50 and second shaft end 52 includes external threads. In some examples, a portion of first shaft end 50 and/or second shaft end 52 include an unthreaded (i.e., smooth) external surface. First shaft element 24 and second shaft element 26 are oriented about central cavity 44, and central cavity 44 is defined by first internal surface 54 of first shaft element 24 and second internal surface 56 of second shaft element 26. Radial springs 20 are situated radially outward from first shaft element 24 and second shaft element 26 with respect to shaft axis X-X. Compression spring 22 is situated radially outward from radial springs 20 with respect to shaft axis X-X.

Cap 12 can be configured to move axially along shaft axis X-X, and can be configured to engage first cap end 36 and second cap end 38. Housing 14 can be configured to receive cap 12 through cap opening 34. Cap 12 and housing 14 can be configured to be actuated by hand and/or with tools such as pliers. **In** particular, cap 12 and housing 14 can be configured to be actuated by a cleco-style plier which can interface with housing lip 58 and closed end 28 of cap 12 to depress cap 12 into housing 14. Tapered sections 46 of internal alignment shaft 16 guide the lateral movement of first shaft element 24 and second shaft element 26 relative to central body 42 of internal alignment shaft 16. Radial springs 20 can be configured to constrict about first shaft element 24 and second shaft element 26 such that first shaft element 24 and second shaft element 26 move laterally inward toward central body 42 of internal alignment shaft 16. Compression spring 22 can be configured to allow first shaft element 24 and second shaft element 26 to move laterally outward away from central body 42 of internal alignment shaft 16.

First shaft element 24 and second shaft element 26 can be oriented relative to each other such that second shaft element 26 is disposed alongside and parallel first shaft element 24. **In** some examples, first shaft element 24 and second shaft element 26 can be approximately the same size and/or can be approximately hemicylindrical in shape. **In** other examples, first shaft element 24 and second shaft element 26 can be asymmetric, such that first shaft element 24 is larger or smaller than second shaft element 26 and/or makes up a greater or lesser percentage of threaded shaft section 18 than second shaft element 26. **In** some examples, first shaft element 24 and/or second shaft element 26 can have a uniform partially cylindrical cross section along the length of first shaft element 24 and/or second shaft element 26. **In** other examples, a portion of first shaft element 24 and/or second shaft element 26 has a partially cylindrical cross section (for example, at first shaft end 50 and/or second shaft end 52), and another portion of first shaft element 24 and/or second shaft element 26 has a non-partially cylindrical cross section (such as a concave, flattened, and/or truncated shape).

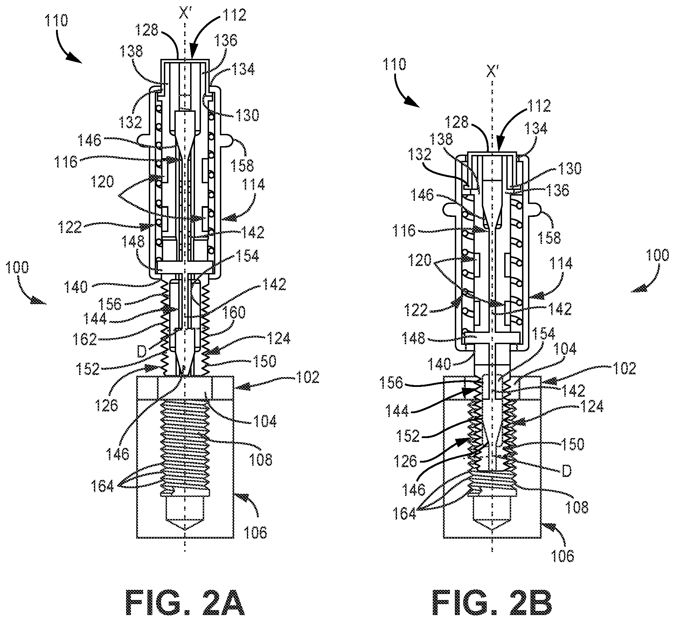

As described in more detail below with respect to FIGS. 2A-3, a fastener such as fastener 10 can be used to fasten two or more workpieces together by engaging threaded openings. Fastener 10 can be used as a temporary fastener for measurement/fitting purposes, and can be reused without significant degradation of the threads both on the surface of fastener 10 and within the openings in the workpieces. More generally, fastener 10 is able to engage and disengage from threading without significantly impairing future usability, e.g. when reinstalled or installed at a new location.

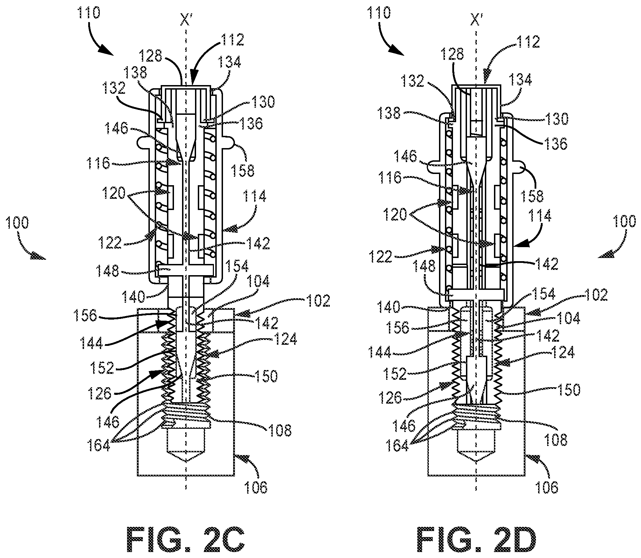

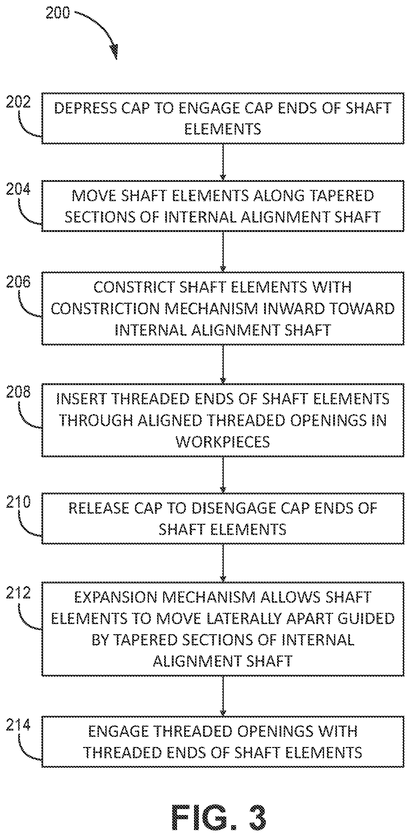

FIG. 2A is a cross-sectional view of fastening system 100. Fastening system 100 includes first workpiece 102 with first opening 104, second workpiece 106 with second opening 108, and fastener 110. Fastener 110 includes cap 112, housing 114, internal alignment shaft 116, threaded shaft section 118, releasable constriction mechanism 120, and releasable expansion mechanism 122. Threaded shaft section 118 includes first shaft element 124 and second shaft element 126. FIG. 2B is a cross-sectional view of fastening system 100 with cap 112 of fastener 110 depressed. FIG. 2C is a cross-sectional view of fastening system 100 with fastener 110 inserted through first opening 104 and into second opening 108. FIG. 2D is a cross-sectional view of fastening system 100 with cap 112 released. FIG. 3 depicts method 200 of fastening two workpieces with a fastener (such as fasteners 10, 110). Method 200 includes steps 202-206 (illustrated by FIGS. 2A-2B), 208 (illustrated by FIG. 2B), 210 (illustrated by FIG. 2C), and 212-214 (illustrated by FIG. 2D). FIG. 3 will be discussed alongside FIGS. 2A-2D in turn below. While method 200 is discussed below in relation to fastener 110, it should be understood that method 200 can be similarly performed with fasteners such as fasteners 10, 310, 410, 510. With respect to fastener 310, as described further below, threaded end 322 will engage threads within an opening.

Similar to cap 12, cap 112 can have an approximate cylindrical shape and can be substantially hollow. In the example shown in FIGS. 2A-2D, cap 112 extends from closed end 128 to open end 130 and includes cap lip 132 at or adjacent open end 130, such that open end 130 has a diameter which is larger than the cap opening 134 formed in housing 114 through which closed end 128 extends. Housing 114 can surround first cap end 136 of first shaft element 124 and second cap end 138 of second shaft element 126, and can be approximately cylindrical in shape and substantially hollow. Housing 114 can extend along shaft axis X'-X' from cap 112 to threaded shaft section 118, and can define cap opening 134 and shaft opening 140. Central body 142 of internal alignment shaft 116 extends along shaft axis X'-X' and is surrounded by central cavity 144. Central cavity 144 separates first shaft element 124 and second shaft element 126 from central body 142. In the example shown in FIGS. 2A-2D, internal alignment shaft 116 includes tapered sections 146 oriented along central body 142. Tapered sections 146 can be approximately conical in shape. Internal alignment shaft 116 can additionally include cross bar 148, which can be oriented perpendicular to central body 142. Threaded shaft section 118 includes first shaft element 124, which extends along shaft axis X'-X' from first cap end 136 to first threaded end 150, and second shaft element 126, which extends along shaft axis X'-X' from second cap end 138 to second threaded end 152. Both first shaft element 124 and second shaft element 126 have an approximately partially cylindrical shape. In the example shown in FIGS. 2A-2D, at least a portion of both first threaded end 150 and second threaded end 152 include external threads. First shaft element 124 and second shaft element 126 are oriented about central cavity 144, and central cavity 144 is defined by first internal surface 154 of first shaft element 124 and second internal surface 156 of second shaft element 126. Releasable constriction mechanism 120 is situated radially outward from first shaft element 124 and second shaft element 126 with respect to shaft axis X'-X'. Releasable expansion mechanism 122 is situated radially outward from releasable constriction mechanism 120 with respect to shaft axis X'-X'. In some examples, releasable constriction mechanism 120 can be one or more radial springs (such as radial springs 20 shown in FIGS. 1A-1E), and releasable expansion mechanism 122 can be one or more compression springs (such as compression spring 22 shown in FIGS. 1A-1E).

Cap 112 can be configured to move axially along shaft axis X'-X', and can be configured to engage first cap end 136 and second cap end 138. Housing 114 can be configured to receive cap 112 through cap opening 134. Cap 112 and housing 114 can be configured to be actuated by hand and/or with tools such as pliers. In particular, cap 112 and housing 114 can be configured to be actuated by a cleco-style plier which can interface with housing lip 158 and closed end 128 of cap 112 to depress cap 112 into housing 114. Tapered sections 146 of internal alignment shaft 116 guide the lateral movement of first shaft element 124 and second shaft element 126 relative to central body 142 of internal alignment shaft 116. Radial springs 120 can be configured to constrict about first shaft element 124 and second shaft element 126 such that first shaft element 124 and second shaft element 126 move laterally inward toward central body 142 of internal alignment shaft 116. Compression spring 122 can be configured to allow first shaft element 124 and second shaft element 126 to move laterally outward away from central body 142 of internal alignment shaft 116. In this manner, fastener 110 can operate in substantially the same manner as fastener 10 (described above with respect to FIGS. 1A-1E).

In step 202, cap 112 is depressed as shown in FIGS. 2A-2B. The depression of cap 112 translates cap 112 along shaft axis X'-X'. The depression of cap 112 causes cap 112 to encounter and engage first cap end 136 of first shaft element 124 and second cap end 138 of second shaft element 126. The depression of cap 112 can be performed by a user directly (for example, by hand-depressing the cap using a portion of the user's hand, such as one or more fingers) or through the use of a tool such as a cleco-style plier.

In step 204, first shaft element 124 and second shaft element 126 move along tapered section 146 of internal alignment shaft 116, as shown in FIGS. 2A-2B. Tapered section 146 guide the movement of first shaft element 124 and second shaft element 126 both laterally and axially relative to internal alignment shaft 116 with respect to shaft axis X'-X'.

In step 206, releasable constriction mechanism 120 constricts first shaft element 124 and second shaft element 126 as shown in FIGS. 2A-2B. This constriction causes the lateral inward movement (that is, laterally inward toward internal alignment shaft 116 which extends along shaft axis X'-X') of first shaft element 124 and second shaft element 126. As described above in step 204, tapered section 146 guide the movement of first shaft element 124 and second shaft element 126. Steps 204 and 206 can occur approximately simultaneously. Releasable constriction mechanism 120 can be one or more radial springs, such as radial springs 20 (shown in FIGS. 1A-1E).

In step 208, first threaded end 150 of first shaft element 124 and second threaded end 152 of second shaft element 126 are inserted through first opening 104 of first workpiece 102 and subsequently into second opening 108 of second workpiece 106, as shown in FIG. 2B. First opening 104 is aligned with second opening 108 such that first opening 104 and second opening 108 are oriented along a common axis, which can align with shaft axis X'-X'. Due to the lateral inward movement of first shaft element 124 and second shaft element 126 in steps 204-206, the major diameter D extending from first external surface 160 of first threaded end 150 to second external surface 162 of second threaded end 152 decreases, allowing first threaded end 150 and second threaded end 152 to be inserted through first opening 104 and into second opening 108. Major diameter D increases or decreases at a uniform rate across first shaft element 124 and second shaft element 126.

In step 210, cap 112 is released, as shown in FIGS. 2C-2D. The release of cap 112 causes the movement of cap 112 along shaft axis X'-X' in the opposite direction of the depression of cap 112 in step 202. The release of cap 112 causes cap 112 to disengage first cap end 136 of first shaft element 124 and second cap end 138 of second shaft element 126. The release of cap 112 can be performed by a user releasing pressure on cap 112 directly or by releasing a tool used to depress cap 112.

In step 212, releasable expansion mechanism 122 allows first shaft element 124 and second shaft element 126 to move laterally apart from each other, as shown in FIG. 2D. As described above in steps 204-206, the profile of tapered section 146 guides the lateral outward movement of first shaft element 124 and second shaft element 126. Releasable expansion mechanism 122 can be one or more compression springs, such as compression spring 22 (shown in FIGS. 1A-1E).

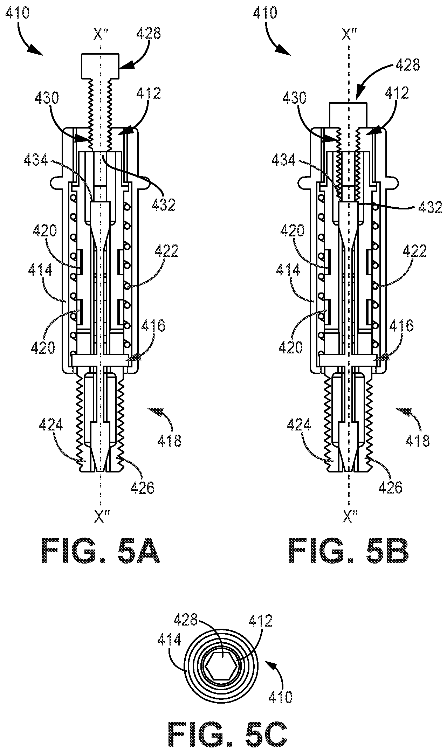

In step 214, first threaded end 150 and second threaded end 152 engage threads 164 within second opening 108. This allows fastener 110 to be secured within first opening 104 and second opening 108, thereby fastening first workpiece 102 to second workpiece 106. Steps 212 and 214 can occur approximately simultaneously. First opening 104 can, in some examples, also include threads. In some examples, step 214 can include locking fastener 110 with a locking mechanism (such as locking mechanisms 428, 522 shown in FIGS. 5A-6E). This locking mechanism can be, for example, a thumbscrew or a hex nut. Locking the fastener can be achieved by tightening the locking mechanism with a threaded cap opening disposed in the cap such that the locking mechanism abuts the internal alignment shaft. Tightening the locking mechanism can be performed through hand-tightening.

Method 200 can, in some examples, include additional steps. For example, method 200 can include locking fastener 110 as described above in step 214, depressing cap 112 to disengage threads 164 within second opening 108, and/or removing fastener 110 from first opening 104 and second opening 108 after disengaging threads 164 within second opening 108.

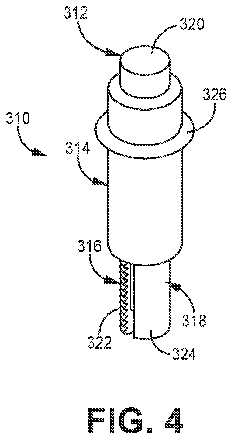

FIG. 4 is a perspective view of fastener 310. Fastener 310 includes cap 312, housing 314, a threaded shaft section which includes threaded shaft element 316 and unthreaded shaft element 318, closed end 320 of cap 312, threaded end 322 of threaded shaft element 316, unthreaded end 324 of unthreaded shaft element 318, and housing lip 326 of housing 314. Fastener 310 can also include an internal alignment shaft having one or more tapered sections (such as internal alignment shaft 16 shown in FIG 1A), one or more radial springs (such as radial springs 20 shown in FIG. 1A), one or more compression springs (such as compression spring 22 shown in FIG. 1A), and additional threaded or unthreaded shaft elements.

Fastener 310 can function in substantially the same manner as fasteners 10, 110 described above in reference to FIGS. 1A-2D. Unthreaded shaft element 318 can be a component having approximately the same shape as threaded shaft element 316. Unthreaded shaft element 318 moves in the same manner as threaded shaft element 316 (and in a similar manner to first shaft element 124 and second shaft element 126, described above in reference to FIGS. 1A-2D) due to the interaction between cap 312, unthreaded shaft element 318, and the tapered section(s) of the internal alignment shaft (not shown in FIG. 4). Unthreaded end 324 of unthreaded shaft element 318 can contact threads within an opening but will not engage the threads.

FIG. 5A is a cross-sectional view of fastener 410. Fastener 410 includes cap 412, housing 414, internal alignment shaft 416, threaded shaft section 418, releasable constriction mechanism 420, releasable expansion mechanism 422, first shaft element 424 and second shaft element 426 within threaded shaft section 418, locking mechanism 428, and threaded cap opening 430 within cap 412. FIG. 5B is a cross-sectional view of fastener 410 with locking mechanism 428 locked. FIG. 5C is a top plan view of fastener 410. FIGS. 5A-5C will be discussed concurrently below.

Fastener 410 can function in substantially the same manner as fasteners 10, 110 described above in reference to FIGS. 1A-2D with respect to the fastening of workpieces (e.g., cap 412, housing 414, internal alignment shaft 416, threaded shaft section 418, releasable constriction mechanism 420, releasable expansion mechanism 422, first shaft element 424, and second shaft element 426 operate in substantially the same manner as their corresponding components in fasteners 10, 110).

In the example shown in FIGS. 5A-5C, locking mechanism 428 is a hex nut which is rotatably insertable into fastener 410 through cap 412 via threaded cap opening 430. In the example shown in FIGS. 5A-5C, threaded cap opening 430 is centered within cap 412. Locking mechanism 428 can be rotated by a user (either manually or automatically, and through hand-tightening or with a suitable tool) through cap 412 such that locking mechanism 428 moves axially along axis X"-X". When locking mechanism 428 is positioned as shown in FIG. 5A, fastener 410 is unlocked and cap 412 can be either depressed or released. When locking mechanism 428 is positioned as shown in FIG. 5B (with end 432 of locking mechanism 428 directly abutting end 434 of internal alignment shaft 416), fastener 410 is locked and cap 412 will remain depressed until locking mechanism 428 is sufficiently loosened. In this manner, locking mechanism 428 is captive within cap 412 and torques against internal alignment shaft 416 to prevent any depression and/or activation of internal alignment shaft 416 (and, accordingly, prevents movement of fastener 410 within a threaded opening). In some examples, a locking mechanism can replace the cap, or the locking mechanism and cap can be incorporated into a unitary component. In these examples, tightening the locking mechanism can both depress the cap (or cap replacement) and lock the fastener.

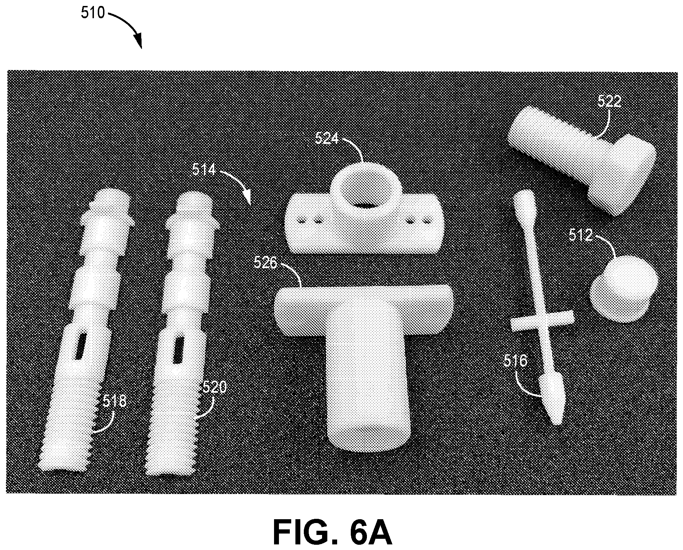

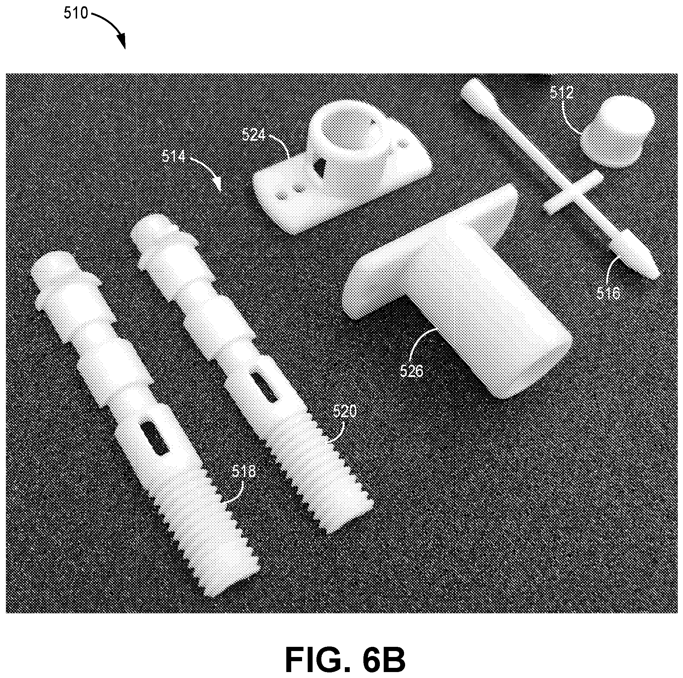

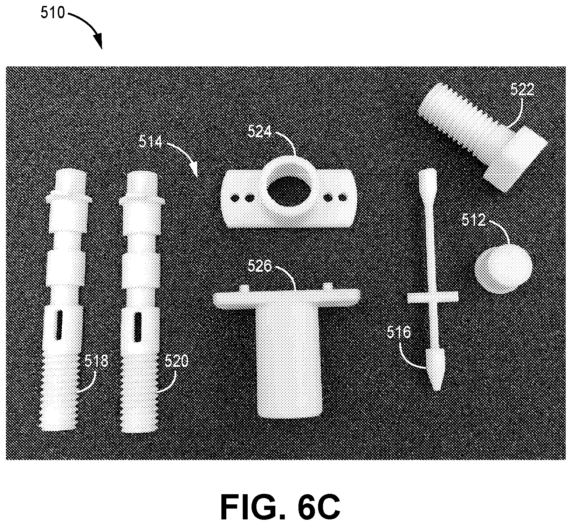

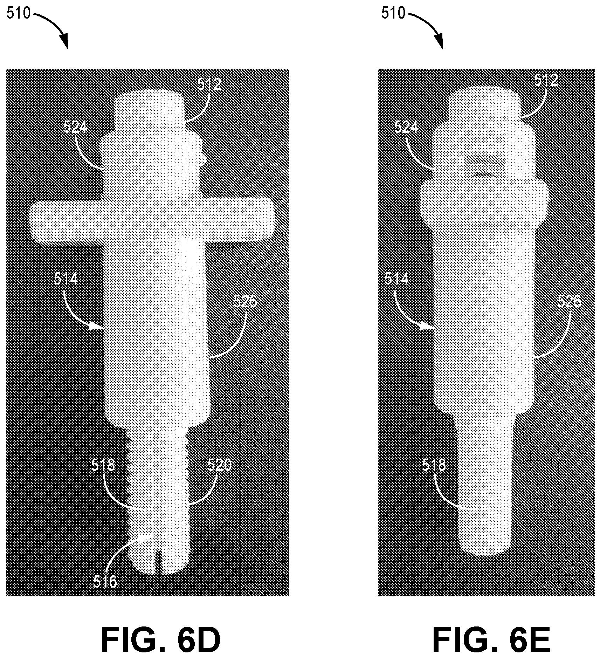

FIGS. 6A-6B are perspective views of fastener 510 separated into components. Fastener 510 includes cap 512, housing 514, internal alignment shaft 516, first shaft element 518, second shaft element 520, locking mechanism 522, first housing component 524, and second housing component 526. Fastener 310 can also include one or more radial springs (such as radial springs 20 shown in FIG. 1A), as well as one or more compression springs (such as compression spring 22 shown in FIG. 1A). FIG. 6C is a top plan view of the components of fastener 510. FIGS. 6D-6E are side views of fastener 510 once assembled. FIGS. 6A-6E will be discussed concurrently below.

Fastener 510 can function in substantially the same manner as fasteners 10, 110, 410 described above in reference to FIGS. 1A-2D and 5A-5C with respect to the fastening of workpieces (e.g., cap 512, housing 514, internal alignment shaft 516, first shaft element 518, and second shaft element 520 operate in substantially the same manner as their corresponding components in fasteners 10, 110, 410). Further, locking mechanism 522 can function in substantially the same manner as locking mechanism 428 (described above in reference to FIGS. 5A-5C). In the example shown in FIGS. 6A-6E, locking mechanism 522 can replace cap 512. In these examples, tightening locking mechanism 522 can both depress internal alignment shaft 516 and lock fastener 510. First housing component 524 and second housing component 526, when assembled, can form housing 514. First housing component 524 and second housing component 526 can be joined with bolts, snaps, or other suitable connections.

In some examples, fasteners 10, 110, 310, 410, 510 can include one or more threaded shaft elements and/or one or more unthreaded shaft elements. The unthreaded shaft elements can be situated between threaded shaft elements in a repeating or non-repeating pattern. The shaft elements can all be the same size (for example, three shaft elements each making up approximately one third of a cylinder) or can have varying sizes relative to the other shaft elements.

A fastener as described herein provides numerous advantages. A fastener with a uniformly expanding diameter along the length of its shaft ends does not require the opening to be designed for the fastener (for example, if the fastener is being used temporarily). This fastener design is thereby compatible with various openings, such as threaded blind holes, threaded through holes, countersink holes, counterbore holes, and spot face holes. Additionally, this fastener design can be used with locking threaded inserts (such as Heli-Coil^{®} or Keensert^{®} inserts) without wearing out the locking feature. A fastener which does not require rotation to be inserted into a threaded opening prevents wear on the threads of both the opening and the fastener, and maintains alignments of the workpieces. Finally, this fastener can be actuated in various ways to provide greater adaptability during use.

### Discussion of Possible Embodiments

The following are non-exclusive descriptions of possible embodiments of the present invention.

A fastener for engaging a threaded opening includes first and second shaft elements, an internal alignment shaft, a releasable constriction mechanism, a releasable expansion mechanism, and a cap. The first shaft element extends along a shaft axis from a first cap end to a first shaft end and has a partially cylindrical shape. The second shaft element extends along the shaft axis from a second cap end to a second shaft end and has a partially cylindrical shape. The second shaft element is disposed alongside and parallel the first shaft element. The internal alignment shaft extends along the shaft axis and is surrounded by a central cavity. The first shaft element and the second shaft element are oriented about the central cavity and the central cavity is defined by a first internal surface of the first shaft element and a second internal surface of the second shaft element. The releasable constriction mechanism is configured to constrict about the first shaft element and the second shaft element such that the first shaft element and the second shaft element move laterally inward toward the internal alignment shaft. The releasable expansion mechanism is configured to allow the first shaft element and the second shaft element to move laterally outward away from the internal alignment shaft. The cap is configured to move axially along the shaft axis, and is configured to engage the first cap end of the first shaft element and the second cap end of the second shaft element such that the first shaft element and the second shaft element move axially relative to the internal alignment shaft. At least a portion of at least one of the first shaft end and the second shaft end comprises external threads.

The fastener of the preceding paragraph can optionally include, additionally and/or alternatively, any one or more of the following features, configurations and/or additional components:
A fastener for engaging a threaded opening according to an exemplary embodiment of the present invention, among other possible things, includes first and second shaft elements, an internal alignment shaft, a releasable constriction mechanism, a releasable expansion mechanism, and a cap. The first shaft element extends along a shaft axis from a first cap end to a first shaft end and has a partially cylindrical shape. The second shaft element extends along the shaft axis from a second cap end to a second shaft end and has a partially cylindrical shape. The second shaft element is disposed alongside and parallel the first shaft element. The internal alignment shaft extends along the shaft axis and is surrounded by a central cavity. The first shaft element and the second shaft element are oriented about the central cavity and the central cavity is defined by a first internal surface of the first shaft element and a second internal surface of the second shaft element. The releasable constriction mechanism is configured to constrict about the first shaft element and the second shaft element such that the first shaft element and the second shaft element move laterally inward toward the internal alignment shaft. The releasable expansion mechanism is configured to allow the first shaft element and the second shaft element to move laterally outward away from the internal alignment shaft. The cap is configured to move axially along the shaft axis, and is configured to engage the first cap end of the first shaft element and the second cap end of the second shaft element such that the first shaft element and the second shaft element move axially relative to the internal alignment shaft. At least a portion of at least one of the first shaft end and the second shaft end comprises external threads.

A further embodiment of the foregoing fastener, wherein the internal alignment shaft comprises two tapered sections oriented along a central body of the internal alignment shaft and which guide the lateral movement of the first shaft element and the second shaft element relative to the internal alignment shaft.

A further embodiment of any of the foregoing fasteners, wherein the two tapered sections are approximately conical in shape.

A further embodiment of any of the foregoing fasteners, wherein the internal alignment shaft further comprises a cross bar oriented perpendicular to the central body and which is configured to axially and laterally engage the first shaft element and the second shaft element via a first slot in the first shaft element and a second slot in the second shaft element.

A further embodiment of any of the foregoing fasteners, further comprising a housing which surrounds the first cap end and the second cap end, extends along the shaft axis to the first shaft end and the second shaft end, and is configured to receive the cap.

A further embodiment of any of the foregoing fasteners, wherein the cap and the housing are configured to be actuated with pliers.

A further embodiment of any of the foregoing fasteners, wherein the first shaft end comprises a threaded section and the second shaft end comprises an unthreaded section.

A further embodiment of any of the foregoing fasteners, further comprising a locking mechanism.

A further embodiment of any of the foregoing fasteners, wherein the locking mechanism comprises one of: a thumbscrew and a hex nut.

A further embodiment of any of the foregoing fasteners, wherein the releasable constriction mechanism comprises one or more radial springs situated radially outward from the first shaft element and the second shaft element with respect to the shaft axis, and the releasable expansion mechanism comprises one or more compression springs situated radially outward from the one or more radial springs with respect to the shaft axis.

A further embodiment of any of the foregoing fasteners, wherein the fastener is configured to be hand actuated.

A fastener for engaging a threaded opening includes first and second shaft elements, an internal alignment shaft, at least one radial spring, at least one compression spring, a cap, and a housing. The first shaft element extends along a shaft axis from a first cap end to a first threaded end and has a partially cylindrical shape. At least a portion of the first threaded end comprises external threads. The second shaft element extends along the shaft axis from a second cap end to a second threaded end and has a partially cylindrical shape. At least a portion of the second threaded end comprises external threads. The second shaft element is disposed alongside and parallel the first shaft element. The internal alignment shaft extends along the shaft axis and is surrounded by a central cavity. The first shaft element and the second shaft element are oriented about the central cavity and the central cavity is defined by a first internal surface of the first shaft element and a second internal surface of the second shaft element. The at least one radial spring is configured to constrict about the first shaft element and the second shaft element such that the first shaft element and the second shaft element move laterally inward toward the internal alignment shaft. The at least one compression spring is configured to allow the first shaft element and the second shaft element to move laterally outward away from the internal alignment shaft. The cap is configured to move axially along the shaft axis, and is configured to engage the first cap end of the first shaft element and the second cap end of the second shaft element such that the first shaft element and the second shaft element move axially relative to the internal alignment shaft. The housing surrounds the first cap end and the second cap end, extends along the shaft axis to the first threaded end and the second threaded end, and is configured to receive the cap.

The fastener of the preceding paragraph can optionally include, additionally and/or alternatively, any one or more of the following features, configurations and/or additional components:
A fastener for engaging a threaded opening according to an exemplary embodiment of the present invention, among other possible things, includes first and second shaft elements, an internal alignment shaft, at least one radial spring, at least one compression spring, a cap, and a housing. The first shaft element extends along a shaft axis from a first cap end to a first threaded end and has a partially cylindrical shape. At least a portion of the first threaded end comprises external threads. The second shaft element extends along the shaft axis from a second cap end to a second threaded end and has a partially cylindrical shape. At least a portion of the second threaded end comprises external threads. The second shaft element is disposed alongside and parallel the first shaft element. The internal alignment shaft extends along the shaft axis and is surrounded by a central cavity. The first shaft element and the second shaft element are oriented about the central cavity and the central cavity is defined by a first internal surface of the first shaft element and a second internal surface of the second shaft element. The at least one radial spring is configured to constrict about the first shaft element and the second shaft element such that the first shaft element and the second shaft element move laterally inward toward the internal alignment shaft. The at least one compression spring is configured to allow the first shaft element and the second shaft element to move laterally outward away from the internal alignment shaft. The cap is configured to move axially along the shaft axis, and is configured to engage the first cap end of the first shaft element and the second cap end of the second shaft element such that the first shaft element and the second shaft element move axially relative to the internal alignment shaft. The housing surrounds the first cap end and the second cap end, extends along the shaft axis to the first threaded end and the second threaded end, and is configured to receive the cap.

A method of fastening a first workpiece to a second workpiece includes depressing a cap of a fastener, thereby engaging a first cap end of a first shaft element of the fastener and a second cap end of a second shaft element of the fastener. The first shaft element extends from the first cap end to a first shaft end and has a partially cylindrical shape. The second shaft element extends from the second cap end to a second shaft end and has a partially cylindrical shape, and is disposed alongside and parallel the first shaft element. At least a portion of at least one of the first shaft end and the second shaft end comprise external threads. The first shaft element and the second shaft element move along tapered sections of an internal alignment shaft of the fastener. The tapered sections guide the movement of the first shaft element and the second shaft element both laterally and axially relative to the internal alignment shaft with respect to a shaft axis along which the first shaft element, the second shaft element, and the internal alignment shaft extend. A releasable constriction mechanism constricts the first shaft element and the second shaft element such that the first shaft element and the second shaft element move laterally inward toward the internal alignment shaft, guided by the tapered sections of the internal alignment shaft. The first shaft end and the second shaft end are inserted through a first opening of the first workpiece and into a second opening of the second workpiece which is situated adjacent to the first opening. The cap is released, thereby disengaging the first cap end and the second cap end. A releasable expansion mechanism allows the first shaft element to move laterally apart from the second shaft element guided by the tapered sections of the internal alignment shaft. The at least a portion of at least one of the first shaft end and the second shaft end comprising external threads engages threads within the second opening.

The method of the preceding paragraph can optionally include, additionally and/or alternatively, any one or more of the following features, configurations and/or additional components:
A method of fastening a first workpiece to a second workpiece according to an exemplary embodiment of the present invention, among other possible things, includes depressing a cap of a fastener, thereby engaging a first cap end of a first shaft element of the fastener and a second cap end of a second shaft element of the fastener. The first shaft element extends from the first cap end to a first shaft end and has a partially cylindrical shape. The second shaft element extends from the second cap end to a second shaft end and has a partially cylindrical shape, and is disposed alongside and parallel the first shaft element. At least a portion of at least one of the first shaft end and the second shaft end comprise external threads. The first shaft element and the second shaft element move along tapered sections of an internal alignment shaft of the fastener. The tapered sections guide the movement of the first shaft element and the second shaft element both laterally and axially relative to the internal alignment shaft with respect to a shaft axis along which the first shaft element, the second shaft element, and the internal alignment shaft extend. A releasable constriction mechanism constricts the first shaft element and the second shaft element such that the first shaft element and the second shaft element move laterally inward toward the internal alignment shaft, guided by the tapered sections of the internal alignment shaft. The first shaft end and the second shaft end are inserted through a first opening of the first workpiece and into a second opening of the second workpiece which is situated adjacent to the first opening. The cap is released, thereby disengaging the first cap end and the second cap end. A releasable expansion mechanism allows the first shaft element to move laterally apart from the second shaft element guided by the tapered sections of the internal alignment shaft. The at least a portion of at least one of the first shaft end and the second shaft end comprising external threads engages threads within the second opening.

A further embodiment of the foregoing method, further comprising locking the fastener within the first opening and the second opening with a locking mechanism.

A further embodiment of any of the foregoing methods, wherein the locking mechanism is a hex nut and locking the fastener comprises tightening the locking mechanism with a threaded cap opening disposed in the cap such that the locking mechanism abuts the internal alignment shaft.

A further embodiment of any of the foregoing methods, wherein tightening the locking mechanism comprises hand-tightening the locking mechanism.

A further embodiment of any of the foregoing methods, wherein depressing the cap of the fastener comprises depressing the cap with a cleco-style plier.

A further embodiment of any of the foregoing methods, wherein depressing the cap of the fastener comprises hand-depressing the cap.

A further embodiment of any of the foregoing methods, further comprising depressing the cap of the fastener to disengage the threads within the second opening.

A further embodiment of any of the foregoing methods, further comprising removing the fastener from the first opening and the second opening.

While the invention has been described with reference to an exemplary embodiment(s), it will be understood by those skilled in the art that various changes may be made without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A fastener for engaging a threaded opening (104, 108), the fastener comprising:
a first shaft element (124) extending along a shaft axis (X'-X') from a first cap end (136) to a first shaft end (150) and having a partially cylindrical shape;
a second shaft element (126) extending along the shaft axis from a second cap end (138) to a second shaft end (152) and having a partially cylindrical shape, the second shaft element disposed alongside and parallel the first shaft element;
an internal alignment shaft (116) extending along the shaft axis and surrounded by a central cavity (144), wherein the first shaft element and the second shaft element are oriented about the central cavity and the central cavity is defined by a first internal surface (54) of the first shaft element and a second internal surface (56) of the second shaft element;
a releasable constriction mechanism (120) configured to constrict about the first shaft element and the second shaft element such that the first shaft element and the second shaft element move laterally inward toward the internal alignment shaft;
a releasable expansion mechanism (122) configured to allow the first shaft element and the second shaft element to move laterally outward away from the internal alignment shaft; and
a cap (112) configured to move axially along the shaft axis, and further configured to engage the first cap end of the first shaft element and the second cap end of the second shaft element such that the first shaft element and the second shaft element move axially relative to the internal alignment shaft;
wherein at least a portion of at least one of the first shaft end and the second shaft end comprises external threads.

2. The fastener of claim **1,** wherein the internal alignment shaft (116) comprises two tapered sections (146) oriented along a central body (142) of the internal alignment shaft and which guide the lateral movement of the first shaft element (124) and the second shaft element (126) relative to the internal alignment shaft.

3. The fastener of claim 2, wherein the two tapered sections (146) are approximately conical in shape.

4. The fastener of claim 2, wherein the internal alignment shaft (116) further comprises a cross bar (148) oriented perpendicular to the central body (142) and which is configured to axially and laterally engage the first shaft element (124) and the second shaft element (126) via a first slot in the first shaft element and a second slot in the second shaft element.

5. The fastener of claim 1, further comprising a housing (114) which surrounds the first cap end (136) and the second cap end (138), extends along the shaft axis (X'-X') to the first shaft end (150) and the second shaft end (152), and is configured to receive the cap (112).

6. The fastener of claim 1, wherein the first shaft end (150) comprises a threaded section and the second shaft end (152) comprises an unthreaded section.

7. The fastener of claim 1, further comprising a locking mechanism (428, 522), optionally wherein the locking mechanism comprises one of: a thumbscrew and a hex nut.

8. The fastener of claim 1, wherein the releasable constriction mechanism (120) comprises one or more radial springs (20) situated radially outward from the first shaft element (124) and the second shaft element (126) with respect to the shaft axis (X'-X'), and the releasable expansion mechanism (122) comprises one or more compression springs (22) situated radially outward from the one or more radial springs with respect to the shaft axis.

9. The fastener of claim 8, wherein the fastener is configured to be hand actuated.

10. A method of fastening a first workpiece (102) to a second workpiece (106), the method comprising:
depressing a cap (112) of a fastener, thereby engaging a first cap end (136) of a first shaft element (124) of the fastener and a second cap end (138) of a second shaft element (126) of the fastener, wherein:
the first shaft element extends from the first cap end to a first shaft end (150) and has a partially cylindrical shape;
the second shaft element extends from the second cap end to a second shaft end (152) and has a partially cylindrical shape, and is disposed alongside and parallel the first shaft element; and
at least a portion of at least one of the first shaft end and the second shaft end comprises external threads;
moving the first shaft element and the second shaft element along tapered sections (146) of an internal alignment shaft (116) of the fastener, wherein the tapered sections guide the movement of the first shaft element and the second shaft element both laterally and axially relative to the internal alignment shaft with respect to a shaft axis (X'-X') along which the first shaft element, the second shaft element, and the internal alignment shaft extend;
constricting, with a releasable constriction mechanism (120), the first shaft element and the second shaft element such that the first shaft element and the second shaft element move laterally inward toward the internal alignment shaft, guided by the tapered sections of the internal alignment shaft;
inserting the first shaft end and the second shaft end through a first opening (104) of the first workpiece and into a second opening (108) of the second workpiece which is situated adjacent to the first opening;
releasing the cap, thereby disengaging the first cap end and the second cap end;
allowing, with a releasable expansion mechanism (122), the first shaft element to move laterally apart from the second shaft element guided by the tapered sections of the internal alignment shaft; and
engaging threads within the second opening with the at least a portion of at least one of the first shaft end and the second shaft end comprising external threads.

11. The method of claim 10, further comprising locking the fastener within the first opening (104) and the second opening (108) with a locking mechanism (428, 522).

12. The method of claim 11, wherein the locking mechanism (428, 522) is a hex nut and locking the fastener comprises tightening the locking mechanism with a threaded cap opening disposed in the cap such that the locking mechanism abuts the internal alignment shaft (116), optionally wherein tightening the locking mechanism comprises hand-tightening the locking mechanism.

13. The method of claim 10, wherein depressing the cap (112) of the fastener comprises depressing the cap with a cleco-style plier.

14. The method of claim 10, further comprising depressing the cap (112) of the fastener to disengage the threads within the second opening (108).

15. The method of claim 10, further comprising removing the fastener from the first opening (104) and the second opening (108).

## Patentansprüche

1. Befestigungselement zum Eingreifen in eine Gewindeöffnung (104, 108), das Befestigungselement umfassend:
ein erstes Schaftelement (124), das sich entlang einer Schaftachse (X'-X') von einem ersten Kappenende (136) zu einem ersten Schaftende (150) erstreckt und eine teilweise zylindrische Form aufweist;
ein zweites Schaftelement (126), das sich entlang der Schaftachse von einem zweiten Kappenende (138) zu einem zweiten Schaftende (152) erstreckt und eine teilweise zylindrische Form aufweist, wobei das zweite Schaftelement neben und parallel zu dem ersten Schaftelement angeordnet ist;
einen inneren Ausrichtschaft (116), der sich entlang der Schaftachse erstreckt und von einem zentralen Hohlraum (144) umgeben ist, wobei das erste Schaftelement und das zweite Schaftelement um den zentralen Hohlraum orientiert sind und der zentrale Hohlraum durch eine erste innere Oberfläche (54) des ersten Schaftelements und eine zweite innere Oberfläche (56) des zweiten Schaftelements definiert ist;
einen lösbaren Verengungsmechanismus (120), der ausgelegt ist, um sich derart um das erste Schaftelement und das zweite Schaftelement zu verengen, dass sich das erste Schaftelement und das zweite Schaftelement seitlich nach innen hin zu dem inneren Ausrichtschaft bewegen;
einen lösbaren Aufweitungsmechanismus (122), der ausgelegt ist, um es dem ersten Schaftelement und dem zweiten Schaftelement zu ermöglichen, sich seitlich nach außen weg von dem inneren Ausrichtschaft zu bewegen; und
eine Kappe (112), die ausgelegt ist, um sich axial entlang der Schaftachse zu bewegen, und ferner ausgelegt ist, um derart in das erste Kappenende des ersten Schaftelements und das zweite Kappenende des zweiten Schaftelements einzugreifen, dass sich das erste Schaftelement und das zweite Schaftelement axial relativ zu dem inneren Ausrichtschaft bewegen;
wobei mindestens ein Abschnitt von mindestens einem von dem ersten Schaftende und dem zweiten Schaftende Außengewinde umfasst.

2. Befestigungselement nach Anspruch 1, wobei der innere Ausrichtschaft (116) zwei sich verjüngende Abschnitte (146), die entlang eines Mittelkörpers (142) des inneren Ausrichtschafts orientiert sind und die die seitliche Bewegung des ersten Schaftelements (124) und des zweiten Schaftelements (126) relativ zu dem inneren Ausrichtschaft führen, umfasst.

3. Befestigungselement nach Anspruch 2, wobei die zwei sich verjüngenden Abschnitte (146) annähernd konisch in ihrer Form sind.

4. Befestigungselement nach Anspruch 2, wobei der innere Ausrichtschaft (116) ferner einen Quersteg (148) umfasst, der senkrecht zu dem Mittelkörper (142) orientiert ist und der ausgelegt ist, um über einen ersten Schlitz in dem ersten Schaftelement und einen zweiten Schlitz in dem zweiten Schaftelement axial und seitlich in das erste Schaftelement (124) und das zweite Schaftelement (126) einzugreifen.

5. Befestigungselement nach Anspruch 1, ferner umfassend ein Gehäuse (114), das das erste Kappenende (136) und das zweite Kappenende (138) umgibt, sich entlang der Schaftachse (X'-X') zu dem ersten Schaftende (150) und dem zweiten Schaftende (152) erstreckt und ausgelegt ist, um die Kappe (112) aufzunehmen.

6. Befestigungselement nach Anspruch 1, wobei das erste Schaftende (150) einen Gewindeabschnitt umfasst und das zweite Schaftende (152) einen gewindelosen Abschnitt umfasst.

7. Befestigungselement nach Anspruch 1, ferner umfassend einen Verriegelungsmechanismus (428, 522), wobei der Verriegelungsmechanismus optional eines von dem Folgenden umfasst: eine Rändelschraube und eine Sechskantmutter.

8. Befestigungselement nach Anspruch 1, wobei der lösbare Verengungsmechanismus (120) eine oder mehrere Radialfedern (20) umfasst, die sich in Bezug auf die Schaftachse (X'-X') radial außerhalb des ersten Schaftelements (124) und des zweiten Schaftelements (126) befinden, und der lösbare Aufweitungsmechanismus (122) eine oder mehrere Druckfedern (22) umfasst, die sich in Bezug auf die Schaftachse radial außerhalb der einen oder mehreren Radialfedern befinden.

9. Befestigungselement nach Anspruch 8, wobei das Befestigungselement ausgelegt ist, um von Hand betätigt zu werden.

10. Verfahren zum Befestigen eines ersten Werkstücks (102) an einem zweiten Werkstück (106), das Verfahren umfassend:
Herunterdrücken einer Kappe (112) eines Befestigungselements, dadurch Ineingriffbringen eines ersten Kappenendes (136) eines ersten Schaftelements (124) des Befestigungselements und eines zweiten Kappenendes (138) eines zweiten Schaftelements (126) des Befestigungselements, wobei:
sich das erste Schaftelement von dem ersten Kappenende zu einem ersten Schaftende (150) erstreckt und eine teilweise zylindrische Form aufweist;
sich das zweite Schaftelement von dem zweiten Kappenende zu einem zweiten Schaftende (152) erstreckt und eine teilweise zylindrische Form aufweist und neben und parallel zu dem ersten Schaftelement angeordnet ist; und
mindestens ein Abschnitt von mindestens einem von dem ersten Schaftende und dem zweiten Schaftende Außengewinde umfasst;
Bewegen des ersten Schaftelements und des zweiten Schaftelements entlang sich verjüngender Abschnitte (146) eines inneren Ausrichtschafts (116) des Befestigungselements, wobei die sich verjüngenden Abschnitte die Bewegung des ersten Schaftelements und des zweiten Schaftelements sowohl seitlich als auch axial relativ zu dem inneren Ausrichtschaft in Bezug auf eine Schaftachse (X'-X') führen, entlang der sich das erste Schaftelement, das zweite Schaftelement und der innere Ausrichtschaft erstrecken;
Verengen, mit einem lösbaren Verengungsmechanismus (120), des ersten Schaftelements und des zweiten Schaftelements derart, dass sich das erste Schaftelement und das zweite Schaftelement seitlich nach innen hin zu dem inneren Ausrichtschaft bewegen, geführt durch die sich verjüngenden Abschnitte des inneren Ausrichtschafts;
Einführen des ersten Schaftendes und des zweiten Schaftendes durch eine erste Öffnung (104) des ersten Werkstücks und in eine zweite Öffnung (108) des zweiten Werkstücks, die sich benachbart zu der ersten Öffnung befindet;
Lösen der Kappe, dadurch Außereingriffbringen des ersten Kappenendes und des zweiten Kappenendes;
Ermöglichen, mit einem lösbaren Aufweitungsmechanismus (122), dass sich das erste Schaftelement seitlich von dem zweiten Schaftelement wegbewegt, geführt durch die sich verjüngenden Abschnitte des inneren Ausrichtschafts; und
Ineingriffbringen von Gewinden innerhalb der zweiten Öffnung mit dem mindestens einen Abschnitt von mindestens einem von dem ersten Schaftende und dem zweiten Schaftende, der Außengewinde umfasst.

11. Verfahren nach Anspruch 10, ferner umfassend ein Verriegeln des Befestigungselements innerhalb der ersten Öffnung (104) und der zweiten Öffnung (108) mit einem Verriegelungsmechanismus (428, 522).

12. Verfahren nach Anspruch 11, wobei der Verriegelungsmechanismus (428, 522) eine Sechskantmutter ist und das Verriegeln des Befestigungselements ein Anziehen des Verriegelungsmechanismus mit einer in der Kappe angeordneten Gewindekappenöffnung umfasst, derart, dass der Verriegelungsmechanismus an dem inneren Ausrichtschaft (116) anliegt, wobei das Anziehen des Verriegelungsmechanismus optional ein Anziehen des Verriegelungsmechanismus von Hand umfasst.

13. Verfahren nach Anspruch 10, wobei das Herunterdrücken der Kappe (112) des Befestigungselements ein Herunterdrücken der Kappe mit einer Zange vom Cleco-Typ umfasst.

14. Verfahren nach Anspruch 10, ferner umfassend ein Herunterdrücken der Kappe (112) des Befestigungselements, um die Gewinde innerhalb der zweiten Öffnung (108) außer Eingriff zu bringen.

15. Verfahren nach Anspruch 10, ferner umfassend ein Entfernen des Befestigungselements aus der ersten Öffnung (104) und der zweiten Öffnung (108).

## Revendications

1. Élément de fixation destiné à venir en prise avec une ouverture filetée (104, 108), l'élément de fixation comprenant :
un premier élément d'arbre (124) s'étendant le long d'un axe d'arbre (X'-X') depuis une première extrémité de capuchon (136) jusqu'à une première extrémité d'arbre (150) et présentant une forme partiellement cylindrique ;
un deuxième élément d'arbre (126) s'étendant le long de l'axe d'arbre depuis une deuxième extrémité de capuchon (138) jusqu'à une deuxième extrémité d'arbre (152) et présentant une forme partiellement cylindrique, le deuxième élément d'arbre étant disposé à côté et parallèlement au premier élément d'arbre ;
un arbre d'alignement interne (116) s'étendant le long de l'axe d'arbre et entouré d'une cavité centrale (144), le premier élément d'arbre et le deuxième élément d'arbre étant orientés autour de la cavité centrale et la cavité centrale étant définie par une première surface interne (54) du premier élément d'arbre et une deuxième surface interne (56) du deuxième élément d'arbre ;
un mécanisme de constriction libérable (120) configuré pour se resserrer autour du premier élément d'arbre et du deuxième élément d'arbre de telle sorte que le premier élément d'arbre et le deuxième élément d'arbre se déplacent latéralement vers l'intérieur en direction de l'arbre d'alignement interne ;
un mécanisme d'expansion libérable (122) configuré pour permettre au premier élément d'arbre et au deuxième élément d'arbre de se déplacer latéralement vers l'extérieur, en s'éloignant de l'arbre d'alignement interne ; et
un capuchon (112) configuré pour se déplacer axialement le long de l'axe d'arbre, et configuré en outre pour venir en prise avec la première extrémité de capuchon du premier élément d'arbre et la deuxième extrémité de capuchon du deuxième élément d'arbre de sorte que le premier élément d'arbre et le deuxième élément d'arbre se déplacent axialement par rapport à l'arbre d'alignement interne ;
dans lequel au moins une partie d'au moins une de la première extrémité d'arbre et de la deuxième extrémité d'arbre comprend des filetages externes.

2. Élément de fixation selon la revendication 1, dans lequel l'arbre d'alignement interne (116) comprend deux sections effilées (146) orientées le long d'un corps central (142) de l'arbre d'alignement interne et qui guident le mouvement latéral du premier élément d'arbre (124) et du deuxième élément d'arbre (126) par rapport à l'arbre d'alignement interne.

3. Élément de fixation selon la revendication 2, dans lequel les deux sections effilées (146) sont de forme approximativement conique.

4. Élément de fixation selon la revendication 2, dans lequel l'arbre d'alignement interne (116) comprend en outre une barre transversale (148) orientée perpendiculairement au corps central (142) et qui est configurée pour venir en prise axialement et latéralement avec le premier élément d'arbre (124) et le deuxième élément d'arbre (126) via une première fente dans le premier élément d'arbre et une deuxième fente dans le deuxième élément d'arbre.

5. Élément de fixation selon la revendication 1, comprenant en outre un boîtier (114) qui entoure la première extrémité de capuchon (136) et la deuxième extrémité de capuchon (138), s'étend le long de l'axe d'arbre (X'-X') jusqu'à la première extrémité d'arbre (150) et la deuxième extrémité d'arbre (152), et est configuré pour recevoir le capuchon (112).

6. Élément de fixation selon la revendication 1, dans lequel la première extrémité d'arbre (150) comprend une section filetée et la deuxième extrémité d'arbre (152) comprend une section non filetée.

7. Élément de fixation selon la revendication 1, comprenant en outre un mécanisme de verrouillage (428, 522), dans lequel éventuellement le mécanisme de verrouillage comprend un parmi : une vis à oreilles et un écrou hexagonal.

8. Élément de fixation selon la revendication 1, dans lequel le mécanisme de constriction libérable (120) comprend un ou plusieurs ressorts radiaux (20) situés radialement vers l'extérieur du premier élément d'arbre (124) et du deuxième élément d'arbre (126) par rapport à l'axe d'arbre (X'-X'), et le mécanisme d'expansion libérable (122) comprend un ou plusieurs ressorts de compression (22) situés radialement vers l'extérieur du ou des ressorts radiaux par rapport à l'axe d'arbre.

9. Élément de fixation selon la revendication 8, dans lequel l'élément de fixation est configuré pour être actionné manuellement.

10. Procédé de fixation d'une première pièce (102) à une deuxième pièce (106), le procédé comprenant :
l'enfoncement d'un capuchon (112) d'une fixation, mettant ainsi en prise une première extrémité de capuchon (136) d'un premier élément d'arbre (124) de la fixation avec une deuxième extrémité de capuchon (138) d'un deuxième élément d'arbre (126) de la fixation, dans lequel :
le premier élément d'arbre s'étend de la première extrémité de capuchon à une première extrémité d'arbre (150) et présente une forme partiellement cylindrique ;
le deuxième élément d'arbre s'étend de la deuxième extrémité de capuchon à une deuxième extrémité d'arbre (152) et présente une forme partiellement cylindrique, et est disposé à côté et parallèlement au premier élément d'arbre ; et
au moins une partie d'au moins une de la première extrémité d'arbre et de la deuxième extrémité d'arbre comprend des filetages externes ;
le déplacement du premier élément d'arbre et du deuxième élément d'arbre le long de sections effilées (146) d'un arbre d'alignement interne (116) de la fixation, les sections effilées guidant le mouvement du premier élément d'arbre et du deuxième élément d'arbre à la fois latéralement et axialement par rapport à l'arbre d'alignement interne par rapport à un axe d'arbre (X'-X') le long duquel s'étendent le premier élément d'arbre, le deuxième élément d'arbre et l'arbre d'alignement interne ;
la contrainte, avec un mécanisme de constriction libérable (120), du premier élément d'arbre et du deuxième élément d'arbre de sorte que le premier élément d'arbre et le deuxième élément d'arbre se déplacent latéralement vers l'intérieur en direction de l'arbre d'alignement interne, guidés par les sections effilées de l'arbre d'alignement interne ;
l'insertion de la première extrémité d'arbre et de la deuxième extrémité d'arbre à travers une première ouverture (104) de la première pièce et dans une deuxième ouverture (108) de la deuxième pièce qui est située adjacente à la première ouverture ;
la libération du capuchon, dégageant ainsi la première extrémité de capuchon et la deuxième extrémité de capuchon ;
le fait de permettre, grâce à un mécanisme d'expansion libérable (122), au premier élément d'arbre de s'écarter latéralement du deuxième élément d'arbre guidé par les sections effilées de l'arbre d'alignement interne ; et
la mise en prise des filetages à l'intérieur de la deuxième ouverture avec au moins une partie d'au moins une de la première extrémité d'arbre et de la deuxième extrémité d'arbre comprenant des filetages extérieurs.

11. Procédé selon la revendication 10, comprenant en outre le verrouillage de l'élément de fixation dans la première ouverture (104) et la deuxième ouverture (108) au moyen d'un mécanisme de verrouillage (428, 522).

12. Procédé selon la revendication 11, dans lequel le mécanisme de verrouillage (428, 522) est un écrou hexagonal et le verrouillage de l'élément de fixation comprend le serrage du mécanisme de verrouillage au moyen d'une ouverture de capuchon filetée disposée dans le capuchon de sorte que le mécanisme de verrouillage bute contre l'arbre d'alignement interne (116), dans lequel éventuellement le serrage du mécanisme de verrouillage comprend un serrage manuel du mécanisme de verrouillage.

13. Procédé selon la revendication 10, dans lequel l'enfoncement du capuchon (112) de l'élément de fixation comprend l'enfoncement du capuchon avec une pince de type cleco.

14. Procédé selon la revendication 10, comprenant en outre l'enfoncement du capuchon (112) de l'élément de fixation pour dégager les filetages à l'intérieur de la deuxième ouverture (108).

15. Procédé selon la revendication 10, comprenant en outre le retrait de l'élément de fixation de la première ouverture (104) et de la deuxième ouverture (108).
